# EUROPÄISCHE PATENTSCHRIFT

(11) **EP 0 603 224 B1**
(45) Veröffentlichungstag und Bekanntmachung des Hinweises auf die Patenterteilung: **01.07.1998**
(21) Anmeldenummer: 92918310.1
(22) Anmeldetag: 02.09.1992
(51) Int. Cl.: C08F 4/602, C08F 2/40, C08F 4/609

(54) **DES- UND REAKTIVIERTE METALLOCENKATALYSATORSYSTEME**
DE- AND REACTIVATED METALLOCENE CATALYST SYSTEMS
SYSTEMES CATALYSEURS METALLOCENES DESACTIVES ET REACTIVES

(30) Priorität: 12.09.1991 DE 4130352
(43) Veröffentlichungstag der Anmeldung: 29.06.1994
(73) Patentinhaber: BASF Aktiengesellschaft, 67063 Ludwigshafen (DE)
(72) Erfinder: SCHLUND, Rueger, D-6800 Mannheim 1 (DE); KERSTING, Meinolf, D-6702 Bad Duerkheim (DE); HUNGENBERG, Klaus-Dieter, D-6943 Birkenau (DE)
(86) Internationale Anmeldenummer: EP9202016
(87) Internationale Veröffentlichungsnummer: WO9305079

(56) Entgegenhaltungen:
- EP-A- 355 447
- EP-A- 399 348
- EP-A- 0 170 410
- EP-A- 0 188 914

## Beschreibung

Die vorliegende Erfindung betrifft Metallocenkatalysatorsysteme zur Polymerisation von C₂- bis C₁₀-Alkenen, erhältlich durch reversible Desaktivierung eines voraktivierten Metallocenkatalysatorsystems, das als aktive Bestandteile Metallocenkomplexe von Metallen der IV. und V. Nebengruppe des Periodensystems und eine oligomere Alumoxanverbindung enthält, durch Umsetzung mit organischen Halogeniden und Reaktivierung des desaktivierten Metallocenkatalysatorsystems durch Zugabe von Organometallverbindungen.

Außerdem betrifft die Erfindung, Verfahren zur Herstellung der Metallocenkatalysatorsysteme, deren Verwendung zur Herstellung von Polyalkenen sowie Verfahren zur Herstellung von Polyalkenen mit Hilfe dieser Metallocenkatalysatorsysteme.

Da sich Metallocenkatalysatoren dadurch auszeichnen, daß sie optimale Polymerisationsaktivität dann erreichen, wenn sie mit Aluminiumverbindungen voraktiviert sind, kann es bei der Dosierung der Katalysatoren zu verfahrenstechnischen Problemen, z.B. Verstopfung des Dosiersystems, durch verfrühte Polymerisation, kommen. Dieses Problem kann durch eine Desaktivierung solcher Katalysatorsysteme umgangen werden, wobei die Desaktivierung allerdings reversibel erfolgen muß.

Der vorliegenden Erfindung lag daher die Aufgabe zugrunde, voraktivierte Metallocenkatalysatorsysteme zu desaktivieren und anschließend wieder zu reaktivieren.

Die Aufgabe wird erfindungsgemäß gelöst durch die eingangs definierten Metallocenkatalysatorsysteme. Außerdem wurden Verfahren zur Herstellung der Metallocenkatalysatorsysteme, deren Verwendung zur Herstellung von Polyalkenen sowie Verfahren zur Herstellung von Polyalkenen mit Hilfe dieser Metallocenkatalysatorsysteme gefunden.

Zur Desaktivierung geeignete Metallocenkatalysatorsysteme enthalten als aktiven Bestandteil u.a. eine Komplexverbindung von Metallen der IV. und V. Nebengruppe des Periodensystems, insbesondere von Titan, Zirkonium, Hafnium, Vanadium, Niob oder Tantal. Vorzugsweise werden dabei solche Komplexverbindungen verwendet, bei denen das Metallatom über π-Bindungen mit ungesättigten cyclischen Kohlenwasserstoffatomen verbunden ist, beispielsweise Cyclopentadienyl-, Fluorenyl- oder Indenylgruppen. Weiterhin sind die bevorzugt eingesetzten Komplexverbindungen dadurch gekennzeichnet, daß das Metallatom noch mit weiteren Liganden, insbesondere mit Fluor, Chlor, Brom, Jod, Wasserstoff oder einem C₁- bis C₁₀-Alkyl, beispielsweise einer Methyl-, Ethyl-, Propyl- oder Butylgruppe, verknüpft sein kann. Besonders geeignete Komplexverbindungen enthalten dabei insbesondere Chlor.

Nur beispielsweise sei hier auf die EP-A 129 368, EP-A 407 870, EP-A 413 326, EP-A 399 347 und DE-A 39 29 693 verwiesen, in denen geeignete Metallocenkatalysatorsysteme beschrieben sind.

Als bevorzugt haben sich Metallocenkatalysatorsysteme erwiesen, die als aktive Bestandteile
a) einen Metallocenkomplex der allgemeinen Formel I 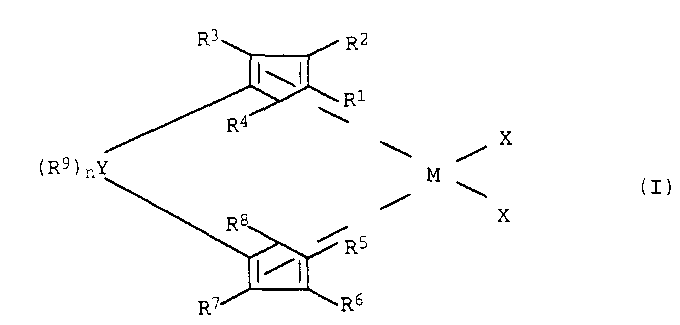 in der die Substituenten folgende Bedeutung haben:
   - R¹ bis R³ und R⁵ bis R⁷: Wasserstoff, C₁- bis C₁₀-Alkyl, 5- bis 7-gliedriges Cycloalkyl, das seinerseits ein C₁- bis C₆-Alkyl als Substituent tragen kann, C₆- bis C₁₅-Aryl oder Arylalkyl, wobei gegebenenfalls auch zwei benachbarte Reste R¹ und R², R² und R³, R⁵ und R⁶ oder R⁶ und R⁷ gemeinsam für 4 bis 15 C-Atome aufweisende cyclische Gruppen stehen können,
   - R⁴, R⁸: Wasserstoff, C₁- bis C₁₀-Alkyl,
   - R⁹: C₁- bis C₁₀-Alkyl, C₃- bis C₁₀-Cycloalkyl, C₆- bis C₁₀-Aryl,
   - M: Titan, Zirkonium, Hafnium, Vanadium, Niob, Tantal,
   - Y: Silicium, Germanium, Zinn, Kohlenstoff,
   - X: Wasserstoff, Fluor, Chlor, Brom, Jod oder C₁- bis C₁₀-Alkyl
   und n für die Zahlen 0, 1 oder 2 steht,
b) sowie eine offenkettige oder cyclische Alumoxanverbindung der allgemeinen Formel II bzw. III 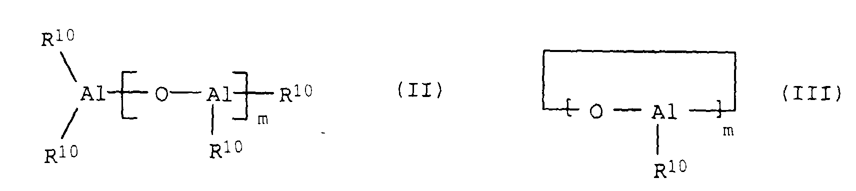 wobei R¹⁰ eine C₁- bis C₄-Alkylgruppe bedeutet und m für eine Zahl von 5 bis 30 steht,
   enthalten.
   Bei den Metallocenkomplexen der allgemeinen Formel I sind diejenigen bevorzugt, bei denen
   - R¹ und R⁵: gleich sind und für Wasserstoff oder C₁- bis C₁₀-Alkylgruppen stehen,
   - R⁴ und R⁸: gleich sind und für Wasserstoff eine Methyl-, Ethyl-, iso-Propyl- oder tert.-Butylgruppe stehen
   - R², R³, R⁶ und R⁷: die Bedeutung
   R³ und R⁷ C₁- bis C₄-Alkyl
   R² und R⁶ Wasserstoff haben oder zwei benachbarte Reste R² und R³ sowie
   R⁶ und R⁷ gemeinsam für ungesättigte, 4 bis 12 C-Atome aufweisende cyclische Gruppen stehen,
   - R⁹: für C₁- bis C₈-Alkyl,
   - M: für Zirkonium oder Hafnium,
   - Y: für Silicium oder Kohlenstoff und
   - X: für Chlor stehen.

Beispiele für besonders geeignete Komplexverbindungen sind u.a.
Dimethylsilandiylbis(-3-tert.butyl-5-methylcyclopentadienyl)-zirkoniumdichlorid,
Diethylsilandiylbis(-3-tert.butyl-5-methylcyclopentadienyl)-zirkoniumdichlorid,
Methylethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis (-3-tert.butyl-5-methylcyclopentadienyl)-dimethylzirkonium,
Dimethylsilandiylbis(-2-methylindenyl)-zirkoniumdichlorid,
Diethylsilandiylbis(-2-methylindenyl)-zirkoniumdichlorid,
Dimethylsilandiylbis(-2-ethylindenyl)-zirkoniumdichlorid,
Dimethylsilandiylbis (-2-isopropylindenyl)-zirkoniumdichlorid,
Dimethylsilandiylbis(-2-tert.-butylindenyl)-zirkoniumdichlorid,
Diethylsilandiylbis(-2-methylindenyl)-zirkoniumdibromid,
Dimethylsilandiylbis(-2-methyl-5-methylcyclopentadienyl)-zirkoniumdichlorid,
Dimethylsilandiylbis(-2-methyl-5-ethylcyclopentadienyl)-zirkoniumdichlorid,
Dimethylsilandiylbis(-2-ethyl-5-isopropylcyclopentadienyl)-zirkoniumdichlorid,
Dimethylsilandiylbis(-2-methylindenyl)-zirkoniumdichlorid,
Dimethylsilandiylbis(-2-methylbenzindenyl)-zirkoniumdichlorid und
Dimethylsilandiylbis (-2-methylindenyl)-hafniumdichlorid.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist. Beispiele für entsprechende Herstellungsverfahren sind u.a. im Journal of Organometallic Chemistry, 369 (1989), 359-370 beschrieben.

Neben der Komplexverbindung enthalten die Metallocenkatalysatorsysteme noch oligomere Alumoxanverbindungen der allgemeinen Formel II oder III, wobei R¹⁰ bevorzugt für Methyl- oder Ethylgruppen und m bevorzugt für eine Zahl von 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linear als auch cyclischer Kettenmoleküle vor, so daß m als Mittelwert anzusehen ist. Die Alumoxanverbindungen kann außerdem noch Trialkylaluminiumverbindungen enthalten, deren Alkylgruppen jeweils 1 bis 8 C-Atome aufweisen, beispielsweise Trimethyl-, Triethyl- oder Methyldiethylaluminium oder deren organischer Rest teilweise durch Wasserstoffatome substituiert ist.

Es hat sich als vorteilhaft erwiesen, die Komplexverbindung von Metallen der IV. und V. Nebengruppe des Periodensystems und die oligomere Alumoxanverbindung in solchen Mengen zu verwenden, daß das atomare Verhältnis zwischen Aluminium aus der oligomeren Alumoxanverbindung und dem Übergangsmetall aus der Komplexverbindung von Metallen der IV. und V. Nebengruppe des Periodensystems im Bereich von 10:1 bis 10⁶:1, insbesondere im Bereich von 10:1 bis 10⁴:1 liegt.

Zunächst wird die Komplexverbindung von Metallen der IV. und V. Nebengruppe des Periodensystems mit der oligomeren Alumoxanverbindung vermischt, wodurch sich ein aktiviertes Katalysatorsystem bildet. Die Dauer dieses Aktivierungsschrittes beträgt üblicherweise 1 bis 120 Minuten, vorzugsweise 10 bis 100 Minuten. Die Vermischung wird bevorzugt in der Weise durchgeführt, daß man die Komplexverbindung mit einer Lösung der oligomeren Alumoxanverbindung in einem inerten Lösungsmittel, beispielsweise in Benzol, Toluol, Hexan, Heptan oder deren Mischungen, bei Temperaturen von 0 bis 50°C in Kontakt bringt.

Zur Desaktivierung dieser voraktivierten Metallocenkatalysatorsysteme haben sich organische Halogenide, wie Alkylhalogenide mit 1 bis 10 C-Atomen und Arylhalogenide mit 6 bis 12 C-Atomen, die ihrerseits ein- bis fünffach durch C₁- bis C₁₀-Alkylgruppen oder Halogenatome substituiert sein können, insbesondere Benzylchlorid als geeignet erwiesen. Als besonders bevorzugt hat sich Benzylchlorid erwiesen.

Die zur Desaktivierung eingesetzten Verbindungen werden in der Regel in Mengen von 0,1 bis 5000, vorzugsweise von 1 bis 500, insbesondere von 1 bis 200, bezogen auf Moläquivalente Übergangsmetall eingesetzt.

Die Temperaturen und Drücke, bei denen die Desaktivierung der voraktivierten Metallocenkatalysatorsysteme erfolgt, sind an sich unkritisch. In der Regel wird bei Temperaturen von -70 bis +100°C und Drücken von 0,1 bis 3000 bar gearbeitet. Die Desaktivierung erfolgt üblicherweise über einen Zeitraum von 0,1 bis 100 Minuten.

Die desaktivierten Metallocenkatalysatorsysteme können nun in den Reaktor dosiert werden und anschließend im Reaktor wieder reaktiviert werden.

Zur Reaktivierung dieser desaktivierten Metallocenkatalysatorsysteme haben sich Organometallverbindungen als besonders geeignet erwiesen. Bevorzugt sind Aluminiumorganyle, vorzugsweise Alumoxane.

Insbesondere sind offenkettige oder cyclische Alumoxanverbindungen der allgemeinen Formel II bzw. III zu nennen.

Üblicherweise werden die oligomeren Alumoxanverbindungen in einem inerten Lösungsmittel wie Benzol, Toluol, Hexan, Heptan oder deren Mischungen gelöst und zu den desaktivierten Metallocenkatalysatorsystemen gegeben. Auch hier sind die Temperaturen, Drücke und Zeiträume der Umsetzungen an sich unkritisch, üblicherweise wird bei -70 bis +100°C und 0,1 bis 3000 bar über einen Zeitraum von 0,1 bis 100 Minuten gearbeitet.

Die zur Reaktivierung eingesetzten Verbindungen werden in der Regel in Mengen von 10 bis 10⁵, vorzugsweise von 10² bis 10⁴, insbesondere von 10² bis 10³, bezogen auf Moläquivalente Übergangsmetall eingesetzt.

Die so reaktivierten Metallocenkatalysatorsysteme können zur Herstellung von Polyalkenen verwendet werden.

Darunter werden Homo- und Copolymerisate von C₂- bis C₁₀-Alkenen verstanden, wobei als Monomere vorzugsweise Ethylen, Propylen, Butene, Pentene und Hexene verwendet werden. Die erfindungsgemäßen Katalysatorsysteme eignen sich insbesondere zur Herstellung von Polypropylen und von Copolymerisaten des Propylens mit untergeordneten Anteilen anderer C₂- bis C₁₀-Alkene, insbesondere von Ethylen und Butenen.

Die Herstellung dieser Polymerisate kann in den üblichen, für die Polymerisation von Alkenen verwendeten Reaktoren entweder absatzweise oder bevorzugt kontinuierlich durchgeführt werden. Geeignete Reaktoren sind u.a. kontinuierlich betriebene Rührkessel, wobei man gegebenenfalls auch eine Reihe von mehreren hintereinander geschalteten Rührkesseln verwenden kann.

Die Polymerisation wird bei Drücken von 1 bis 3000 bar und Temperaturen von 0 bis 300°C durchgeführt. Bevorzugt sind dabei Drücke von 1 bis 2500 bar und Temperaturen von 0 bis +150°C. Die Polymerisationszeit beträgt üblicherweise 0,5 bis 10 Stunden.

Polymerisationsreaktionen mit Hilfe der erfindungsgemäßen Katalysatorsysteme lassen sich in der Gasphase, in einer Suspension, in flüssigen Monomeren und in inerten Lösungsmitteln durchführen. Bei der Polymerisation in Lösungsmitteln werden insbesondere flüssige Kohlenwasserstoffe wie Benzol oder Toluol verwendet. Polymerisate mit guten anwendungstechnischen Eigenschaften sind auch bei der Polymerisation in der Gasphase, in einer Suspension und in flüssigen Monomeren erhältlich.

Die mittlere Molmasse der gebildeten Polymerisate kann mit den in der Polymerisationstechnik üblichen Methoden gesteuert werden, beispielsweise durch Zufuhr von Reglern wie Wasserstoff, oder durch Veränderung der Reaktionstemperaturen.

Die hierbei erhältlichen Polymerisate von C₂- bis C₁₀-Alkenen lassen sich vor allem zur Herstellung von Fasern, Folien und Formkörpern verwenden.

Die erfindungsgemäßen des- und reaktivierten Metallocenkatalysatorsysteme zeichnen sich durch sehr gute Handhabbarkeit und gute Produktivität aus.

### Beispiele

### Herstellung von Propylenpolymerisaten

### Beispiel 1

a) Herstellung eines voraktivierten Metallocenkatalysatorsystems
   9 mg (≙ 0,02 mmol) Dimethylsilandiylbis(l-indenyl)-zirkoniumdichlorid 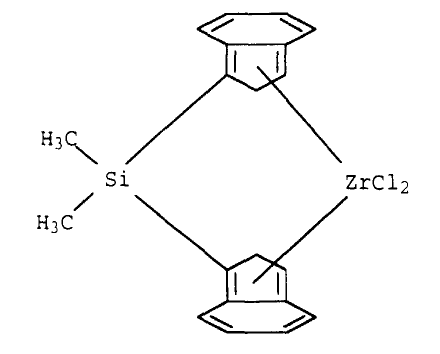 wurden in 5 ml 1,6 molarer Methylalumoxan/Toluol-Lösung gelöst und 15 Minuten bei Raumtemperatur gerührt (Mol-Verhältnis Al:Zr=400:1).
b) Desaktivierung des voraktivierten Metallocenkatalysatorsystems
   Das nach a) hergestellte voraktivierte Metallocenkatalysatorsystem wurde bei Raumtemperatur mit 30 ml einer 0,1 molaren Lösung von Benzylchlorid in Toluol (≙ 3 mmol Benzylchlorid) versetzt und 10 Minuten gerührt.
   Anschließend wurde das nach b) desaktivierte Metallocenkatalysatorsystem in einen Rührbehälter mit einem Nutzvolumen von 1 l gegeben.
c) Reaktivierung des desaktivierten Metallocenkatalysatorsystems
   Zu dem nach b) desaktivierten Metallocenkatalysatorsystems wurden nun im Reaktor 10 ml 1,6 molare Methylalumoxan/Toluol-Lösung (≙ 16 mmol Methylalumoxan) gegeben und 5 Minuten bei Raumtemperatur gerührt.
d) Polymerisation
   Zu dem nach c) reaktivierten Metallocenkatalysatorsystem wurden 150 ml Toluol gegeben und dann bei 50°C und 1 bar 30 Minuten lang Propylen eingeleitet. Anschließend wurde das Reaktionsprodukt in 850 ml eines Gemischs aus Methanol und Salzsäure (Mol-Verhältnis 16:1) eingerührt, der Niederschlag filtriert und 4 Stunden bei 90°C getrocknet.
   Produktivität [g Polypropylen/g Zr-Verbindung] : 2023

### Vergleichsbeispiel V1

Es wurde wie in Beispiel 1 gearbeitet, jedoch erfolgte die Desaktivierung (Schritt b)) mit 78 ml CO₂ (≙ 3,5 mmol), das bei Raumtemperatur über ein Rotameter in die voraktivierte Metallocenkatalysatorlösung eingeleitet wurde.

### Produktivität [g Polypropylen/g Zr-Verbindung]: 223

### Vergleichsbeispiele V2 und V3

Es wurde wie im Beispiel 1 gearbeitet, jedoch ohne Reaktivierung der desaktivierten Metallocenkatalysatorsysteme (Stufe c)).

Diese Katalysatorsysteme waren nicht mehr polymerisationsaktiv, d.h. die Produktivität [g Polypropylen/g Zr-Verbindung] war sowohl in Vergleichsbeispiel 2 als auch in Vergleichsbeispiel 3 Null.

## Patentansprüche

1. Metallocenkatalysatorsysteme zur Polymerisation von C₂- bis C₁₀-Alkenen, erhältlich durch reversibel Desaktivierung eines voraktivierten Metallocenkatalysatorsystems, das als aktive Bestandteile Metallocenkomplexe von Metallen der IV. und V. Nebengruppe des Periodensystems und eine oligomere Alumoxanverbindung enthält, durch Umsetzung mit organischen Halogeniden und Reaktivierung des desaktivierten Metallocenkatalysatorsystems durch Zugabe von Organometallverbindungen.

2. Verfahren zur Herstellung von Metallocenkatalysatorsystemen gemäß den Verfahrensbedingungen von Anspruch 1.

3. Verwendung der Metallocenkatalysatorsysteme gemäß Anspruch 1 zur Herstellung von Polyalkenen.

4. Verfahren zur Herstellung von Polymerisaten von C₂- bis C₁₀-Alkenen mit Hilfe eines Metallocenkatalysatorsystems, dadurch gekennzeichnet, daß man Metallocenkatalysatorsysteme gemäß Anspruch 1 verwendet.

## Claims

1. A metallocene catalyst system for the polymerization of C₂-C₁₀-alkenes, obtainable by reversibly deactivating a preactivated metallocene catalyst system which contains, as active components, a metallocene complex of a metal of subgroup IV or V of the Periodic Table and an oligomeric alumoxane compound by reacting with organic halides and reactivating the deactivated metallocene catalyst system by adding organometallic compounds.

2. A process for the preparation of a metallocene catalyst system according to the process conditions of claim 1.

3. Use of a metallocene catalyst system as claimed in claim 1 for the preparation of a polyalkene.

4. A process for the preparation of a polymer of C₂-C₁₀-alkenes with the aid of a metallocene catalyst system, wherein the metallocene catalyst system as claimed in claim 1 is used.

## Revendications

1. Systèmes catalytiques à métallocènes destinés à la polymérisation d'alcènes en C₂ à C₁₀, que l'on peut obtenir par la désactivation réversible d'un système catalytique à métallocène préactivé, qui contiennent, à titre de constituants actifs, des complexes de métallocènes de métaux des IVème et Vème sous-groupes du système périodique et un composé d'alumoxane oligomérique, par réaction avec des halogénures organiques et réactivation du système catalytique à métallocène désactivé par l'addition de composés organométalliques.

2. Procédé de préparation de systèmes catalytiques à métallocènes selon les conditions opératoires de la revendication 1.

3. Utilisation de systèmes catalytiques à métallocènes suivant la revendication 1, en vue de la préparation de polyalcènes.

4. Procédé de préparation de polymères d'alcènes en C₂ à C₁₀ à l'aide d'un système catalytique à métallocène, caractérisé en ce que l'on utilise des systèmes catalytiques à métallocènes suivant la revendication 1.
